# EUROPÄISCHE PATENTSCHRIFT

(11) **EP 0 567 025 B1**
(45) Veröffentlichungstag und Bekanntmachung des Hinweises auf die Patenterteilung: **08.11.1995**
(21) Anmeldenummer: 93106270.7
(22) Anmeldetag: 17.04.1993
(51) Int. Cl.: C04B 28/08, C04B 18/14, C04B 28/02

(54) **Bindemittelmischung zur einstufigen Herstellung von Dichtwänden**
Binding agent mixture for the one-step production of impervious walls
Mélange de liant pour la production des murs étanches en une étape

(30) Priorität: 23.04.1992 DE 4213348
(43) Veröffentlichungstag der Anmeldung: 27.10.1993
(73) Patentinhaber: Heidelberger Zement AG, D-69120 Heidelberg (DE)
(72) Erfinder: Kassautzki, Michael, W-6902 Sandhausen (DE); Klapperich, Volker Dr., W-6806 Viernheim (DE)
(74) Vertreter: Schmid, Rudolf, Dipl.-Ing., Patentanwalt

(56) Entgegenhaltungen:
- EP-A- 0 239 740
- EP-A- 0 262 302
- EP-A- 0 522 347
- DE-A- 3 339 197
- DE-C- 3 800 776

## Beschreibung

Die Erfindung betrifft eine Bindemittelmischung zur Herstellung von Dichtwänden im einstufigen Verfahren mit hohem, spezifischem Schadstoff-Adsorptions/Adsorptionsvermögen.

Aus Deponien, kontaminierten Böden oder Altlasten allgemein treten häufig grundwassergefährdende Sickerwässer aus. Die Kontamination des Grundwassers und Schädigung des Biosphäre kann u.a. dadurch verringert werden, daß der Schadstoffkörper anhand einer oder mehreren Dichtwänden eingekapselt wird. Dabei müssen die Dichtwände in einem dichtenden Horizont im Liegenden des Schadstoffkörpers gründen. Die maximal erreichbare Tiefe von Dichtwänden beträgt z.Z. ca. 100 m.

Die Dichtwände werden entweder im Einphasen- oder Zweiphasenverfahren hergestellt.

Im Zweiphasenverfahren wird der Schlitz per Schlitzwandgreifer oder- fräse ausgehoben und dabei von einer vorgequollenen Bentonitsuspension gestützt. An der Grenzfläche Schlitz/anstehender Boden penetriert die Bentonitsuspension in den anstehenden Boden. Dabei bildet sich ein dichtender Filterkuchen aus, der verhindert, daß weitere Bentonitsuspension in das Erdreich abfließt. Dieser Filterkuchen überträgt nun den hydrostatischen Druck auf die Grenzfläche Schlitzwand/Erdreich und erzeugt somit die erforderliche Stützwirkung. Nachdem der Schlitz ausgehoben ist, wird die Bentonitsuspension im Kontraktorverfahren von dem eigentlichen Dichtungsmaterial, einer betonartigen Masse, verdrängt. Die Erhärtung dieses Dichtungsmaterials erzeugt dann das dichtende Gefüge.

Im Einphasenverfahren wird eine Bentonitsuspension zunächst in einem separaten Becken für ca. 12-24 Stunden vorgequollen. Nach der Quellzeit wird die Bentonitsuspension mit dem Bindemittel vermischt und während des Aushubs in den Schlitz gepumpt. Dort verbleibt sie und härtet langsam aus. Die Suspension im Einphasenverfahren übernimmt hierzwei Funktionen:
1. Stützung des Schlitzes während der Aushubphase.
2. Ausbildung eines dichten und festen Gefüges.

Dichtwände nach dem Einphasenverfahren werden schrittweise nach dem Pilgerschrittverfahren hergestellt. Dabei werden zunächst nicht aneinander grenzende Lamellen (Primärlamellen) ausgehoben. Sobald die Dichtmasse in diesen Lamellen eine stichfeste Konsistenz hat, werden die verbleibenden Räume zwischen den Primärlamellen übergreifend ausgehoben (Sekundärlamellen). Diese Technik verhindert, daß sich zwischen den einzelnen Lamellen Fugen bilden können, die die Durchlässigkeit der Dichtwand stark erhöhen. Eine weitere Eigenschaft der Einphasenmasse ist, daß sie lange verarbeitbar bleibt, so daß nach dem Aushub HDPE-Folien in den Schlitz eingebracht werden können.

Eine alternative und vorteilhafte Möglichkeit zur Herstellung von Einphasensuspensionen bieten Fertigmischungen. In diesen Massen sind stützende und dichtende Komponenten in optimierten Mengenverhältnissen enthalten und werden werksmäßig vorgemischt. Sie bestehen vorwiegend aus Ton, Füllstoff und einem hydraulisch erhärtenden Bindemittel. Werden diese Massen hochenergetisch in Wasser dispergiert, entfaltet die Suspension die Stützwirkung sofort. Eine gesonderte Vorquellung des Bentonits ist somit nicht nötig.

In den europäischen Patentschriften 0 239 740 und 0 262 302 werden als Hauptbestandteile hydraulisches Bindemittel und Na-aktivierter Bentonit aufgeführt. Mit Hilfe der dort genannten Rezepturen lassen sich Dichtwände mit Permeabilitätskoeffizienten nach DARCY von 1 x 10⁻⁸ bis 1 x 10⁻¹⁰ m/s herstellen, die den Anforderungen im Wasserbau genügen. Geringere Durchlässigkeiten und höhere Erosionsbeständigkeiten lassen sich durch höhere Feststoffgehalte in der Dichtwand realisieren. Dabei können aber Probleme bezüglich der Verarbeitbarkeit auftreten. Die Frischsuspensionen hoher Feststoffgehalte neigen zu ausgeprägtem thixotropen Verhalten, d.h. die Suspension wird hochviskos und somit schwer pumpfähig und erschwert den Aushubvorgang. HDPE-Folien können so nicht mehr eingebracht werden.

Die Patentschrift DE 38 00 776 beansprucht feststoffreiche Dichtwandzusammensetzungen, bei denen durch Zugabe von reaktiver, disperser Kieselsäure die Thixotropie reduziert wird. Weitere Bestandteile können Beschleuniger, Verzögerer oder andere Additive sein, die das Erhärten des Zements steuern oder die Suspensionseigenschaften gezielt beeinflussen. Mit der in DE 38 00 776 beanspruchten Bindemittelmischung lassen sich Permeabilitätskoeffizienten nach DARCY von 1 x 10⁻¹⁰ m/s erreichen.

Die tonmineralischen Komponenten in diesen Systemen reagieren sensibel auf hohe Elektrolytkonzentrationen bzw. zeigen empfindliche Reaktionen mit störenden Kationen wie Ca, Mg, K oder auch mit Schwermetallen. Dadurch können Frischsuspensionseigenschaften wie Filtratwasserwerte oder Fließgrenze negativ beeinflußt werden. Die Komponenten der Einphasensuspensionen müssen daher sorgfältig aufeinander abgestimmt sein.

Dichtwände, die analog zu den oben genannten Kompositionen hergestellt werden, weisen je nach Zusammensetzung und Dosierung einen Permeabilitätskoeffizient zwischen 1 x 10⁻⁹ und 1 x 10⁻¹¹ m/s auf. Die absolute Durchflußgeschwindigkeit läßt sich nach dem Gesetz von DARCY berechnen. Bei einem hydraulischen Gradienten von 10 bis 30 und einer Dichtwandstärke von 0,6 m beträgt die Durchflußgeschwindigkeit 3 x 10⁻⁸ bis 1 x 10⁻¹⁰m/s. Bei diesen relativ geringen Durchlässigkeiten erfolgt der Schadstofftransport in der Dichtwand nicht nur konvektiv sondern, besonders bei hohen Schadstoffgradienten, auch diffusiv. Daraus wird ersichtlich, daß die physikalische Sperrwirkung herkömmlicher Dichtwände eine Schadstoffausbreitung nicht zuverlässig einschränkt oder unterbindet.

Obwohl Tonminerale in wäßrigen Suspensionen z.T. hohe Austauschkapazitäten aufweisen, kann der Tonanteil in einer Dichtwand bedingt durch das hohe Kationen-Störpotential nur geringe Mengen an Schadstoffen adsorbieren. Allein die Konvertierung des Na-Bentonits in die Ca-Form, verursacht durch das Ca-Angebot aus dem Bindemittel, hat eine drastische Reduktion des Adsorptionsvermögens zur Folge. Während der Ausbildung des Zementgefüges werden durch weitere physiko-chemische Prozesse die Tonminerale bezüglich ihres Adsorptionsvermögens desaktiviert. In der ausgehärteten Dichtwand verfügen die Tonminerale nur noch über 10 bis 30 % ihres ursprünglichen Adsorptionsvermögens. Durch höhere Tondosierungen können diese Effekte zumindest teilkompensiert werden, jedoch limitiert die Verarbeitbarkeit der Suspensionen den Anteil an Na-Bentonit.

Aufgabe der Erfindung ist es, eine Bindemittelmischung zur einstufigen Herstellung von Dichtwänden zu entwickeln, die neben einer geringen hydraulischen Durchlässigkeit und einer hohen Erosionsbeständigkeit über ein hohes spezifisches Schadstoff-Adsorptions/Absorptionsvermögen verfügt und auf diese Weise den diffusiven Schadstofftransport hemmt.

Diese Aufgabe wird entsprechend den Merkmalen des Anspruchs 1 gelöst. Vorteilhafte Weiterbildungen der Mischung werden in den Unteransprüchen gekennzeichnet.

Erfindungsgemäß wird das hohe Adsorptionsvermögen der Dichtwand durch Zugabe von natürlichen oder synthetischen Zeolithen oder von zeolithführenden Gesteinsmehl erreicht. Die Schadstoffe, die durch konvektiven und diffusiven Transport die Dichtwand permeieren, werden infolge der hohen Kationenaustauschkapazität der zeolithischen Komponente adsorbiert. Die Adsorption von Schadstoffen beschränkt sich nicht nur auf Schwermetallkationen, auch Kohlenwasserstoffe mit positiven Partialladungen können in den Hohlräumen der Zeolithkristalle absorbiert werden. Limitierender Faktor ist dabei die Molekülgröße. Die maximal adsorbierbare Molekülgröße hängt von der Porenweite des Zeolithes ab. Sie liegt je nach Variante zwischen 4 und 7 Å. Moleküle größeren Radius können die Zeolithkristalle nicht durchströmen. Insofern bilden Zeolithe besonders für langkettige oder aromatische, große Organomoleküle eine wirksame Diffusionsbarriere.

Überraschenderweise hat sich gezeigt, daß die Ausbildung des Zementgefüges die Adsorptionsvorgänge an den Zeolithkomponenten nur gering beeinflußt.

Offenbar werden die Porenöffnungen der Zeolithkristalle nur in geringem Maße von den Hydratationsprodukten des Zementes oder von kolloiddispersen Komponenten der Dichtwand blockiert, so daß die Anlagerungsvorgänge nahezu ungehindert stattfinden können. Auch der pH-Wert, der bei Zementsuspensionen üblicherweise zwischen 10 bis 12,5 liegt, hat keinen Einfluß auf das hohe Absorptionsvermögen. Darüber hinaus werden die Frischsuspensionseigenschaften durch die zeolithische Komponente positiv beeinflußt. Die aus dem Bindemittel stammenden Ca-Ionen werden von der zeolithischen Komponente aufgenommen und dafür Na-Ionen an die Suspension abgegeben. Die Na-Ionen wiederum stabilisieren die Tonsuspension, was sich in geringen Filtratwasserwerten und geringer Sedimentation ausdrückt.

Der Zusatz von Zeolith führt zu keiner unerwünschten Thixotropieerhöhung. Die Festkörperkennwerte der erhärteten Dichtwandmasse unterscheiden sich bezüglich der Erosionsbeständigkeit von zeolithfreien Massen. Die Kristallmorphologie der Zeolithe ermöglicht stabile und intensive Verbindungen zwischen den einzelnen Zeolithkristallen und den nadelförmigen Produkten des hydratisierten Bindemittels. Daraus resultiert eine gesteigerte Erosionsbeständigkeit auch bei hohen hydraulischen Gradienten.

Das Wesen vorliegender Erfindung wird anhand des folgenden Ausführungsbeispiels weiterhin erläutert, das auch ein Vergleichsbeispiel ist.

### Ausführungsbeispiel 1

Messungen nach DIN 4127, 18 130 und 18 136.

| | Standard Fertigmischung (nicht erfindungsgemäß) | zeolithische Fertigmischung gemäß vorliegender Erfindung |
|---|---|---|
| | | |

| Marsh-Zeit (s) | | |
|---|---|---|
| 0h | 37 | 39 |
| 1h | 55 | 56 |

| Filtratwasser (ml) | | |
|---|---|---|
| 0h | 28 | 32 |
| 1h | 34 | 38 |
| 6h | 46 | 48 |

| Stationäre Fließgrenze (PA) Fließgradient (Pa) Kugelhärte | | |
|---|---|---|
| 0h | 33 | 36 |
| 1h | 55 | 55 |

| Durchlässigkeitsbeiwert kf (m/s) | | |
|---|---|---|
| 28d | 1 x 10⁻⁰⁹ | 1 x 10⁻¹⁰ |
| 56d | 5 x 10⁻¹⁰ | 6 x 10⁻¹¹ |

| Einaxiale Druckfestigkeit (N/mm²) | | |
|---|---|---|
| 7d | 0,3 | 0,4 |
| 28d | 0,6 | 0,7 |

Die Mischungen des Beispiels haben einen Feststoffgehalt von 240 kg/m³ und setzen sich wie folgt zusammen:
Standard-Mischung: 68,4 % Hüttensand, 7,6 % hydroxylionenbildender Anreger, 23,0 % Na-Bentonit und 1,0 % Soda.
Zeolithische Mischung: 66,3 % Hüttensand, 5,0 % hydroxylionenbildender Anreger, 21,0 % Na-Bentonit, 5,0 % Zeolith, 2,0 % Füller und 0,7 % Soda.

Die Frischsuspensionswerte der beiden Mischungen unterscheiden sich nicht wesentlich voneinander. Bei den Festkörperkennwerten ist eine deutlich geringere Durchlässigkeit der zeolithischen Dichtwand zu verzeichnen, wobei die Druckfestigkeit nur unwesentlich höher liegt.

Aus Extrapolationen der Ergebnisse von Permeationsversuchen mit Schwermetallbelastungen von 500 mg/l kann eine längere und effektivere Zurückhaltung der Schadstoffe in der zeolithischen Dichtwand abgeleitet werden. So ist z.B. das Adsorptionspotential einer konventionellen Dichtwand bei einer Sickerwasserbelastung von 500 mg/l Cd²⁺ oder Hg²⁺ schon nach etwa 1 bzw. 2 Jahren erschöpft, während die zeolithische Rezeptur bei gleichen Schwermetallkonzentrationen die Schadstoffe etwa 26 bzw. 46 Jahre zurückhalten kann.
Durch Einbeziehung der Zeolithe läßt sich somit nachweisbar eine Barriere herstellen, deren Schadstoffretention sich signifikant von Dichtwänden konventioneller Zusammensetzung unterscheidet.

Es folgen weitere Ausführungsbeispiele:

### Ausführungsbeispiel 2

Messungen nach DIN 4127, 18 130 und 18 136

| | Standard-Fertigmischung (nicht erfindungsgemäß) | zeolithische Fertigmischung gemäß vorliegender Erfindung | |
|---|---|---|---|
| | | Frischprodukt | nach 4-wöchiger Lagerung |
| Dosierung [kg/m3] | 260 | 260 | 260 |

| Marsh-Zeit [sec] | | | |
|---|---|---|---|
| 0h | 40 | 42 | 41 |
| 1h | 60 | 60 | 58 |

| Filtratwasser [ml] | | | |
|---|---|---|---|
| 0h | 25 | 33 | 35 |
| 1h | 28 | 37 | 38 |

| Stationäre Fließgrenze [Pa] Kugelharfe | | | |
|---|---|---|---|
| 0h | 33 | 33 | 33 |
| 1h | 49 | 39 | 39 |

| Durchlässigkeitsbeiwert kf [m/sec] | | | |
|---|---|---|---|
| 28d | 1 x 10E-10 | 1 x 10E-11 | 1 x 10E-11 |

| Einaxiale Druckfestigkeit [N/mm2] | | | |
|---|---|---|---|
| 7d | 0,4 | 0,5 | 0,5 |
| 28d | 0,8 | 1 | 1 |

Die Suspensionsansätze des **Beispiels 2** haben einen Feststoffgehalt von 260 kg/m³. Diese Mischung wird bevorzugt bei besonders starken Sickerwasserkontaminationen verwendet.
Standard-Mischung: 69,4 % Hüttensand, 7,6 % hydroxylionenbildender Anreger, 22,0 % Na-Bentonit und 1 % Soda.
Zeolithische Mischung: 61,5 % Hüttensand, 5,0 % hydroxylionenbildender Anreger, 20,0 % Na-Bentonit, 10,0 % Zeolith, 2,0 Füller und 0,5 % Soda.

Analog zum Beispiel 1 unterscheiden sich beide Mischungen hinsichtlich ihrer Suspensionseigenschaften nur unwesentlich, bezüglich der Festkörpereigenschaften (Druckfestigkeit und Durchlässigkeit) liefert die zeolithischen Mischung bessere Werte.

In mehrmonatigen Permeationsversuchen wurden Proben über Durchflußlösungen mit 1000 mg/l Cr⁶⁺ oder Pb²⁺ beaufschlagt. Die Schadstoffadsorption in den zeolithischen Probenkörpern war wesentlich höher und läßt sich wie folgt darstellen:
Die Schadstoffadsorption in den zeolithischen Proben ist für Cr⁶⁺ oder Pb²⁺ nach 32 bzw. 360 Jahren erschöpft, während in den Standardproben bereits nach 1 bzw. 11 Jahren keine weitere Schadstoffretention erfolgt.

Ein weiterer Suspensionsansatz wurde nach einer 4-wöchigen Lagerungszeit des Fertigproduktes unternommen. Die Suspensions- und Festkörpereigenschaften blieben von der Lagerungsdauer unbeeinflußt.

### Ausführungsbeispiel 3

Messungen nach DIN 4127, 18 130 und 18 136

| | Standard-Fertigmischung (nicht erfindungsgemäß) | zeolithische Fertigmischung gemäß vorliegender Erfindung |
|---|---|---|
| Dosierung [kg/m3] | 220 | 220 |

| Marsh-Zeit [sec] | | |
|---|---|---|
| 0h | 35 | 36 |
| 1h | 40 | 41 |

| Filtratwasser [ml] | | |
|---|---|---|
| 0h | 35 | 36 |
| 1h | 45 | 43 |

| Stationäre Fließgrenze [Pa] Kugelharfe | | |
|---|---|---|
| 0h | 17 | 17 |
| 1h | 24 | 24 |

| Durchlässigkeitsbeiwert kf [m/sec] | | |
|---|---|---|
| 28d | 5 x 10E-9 | 1 x 10E-9 |

| Einaxiale Druckfestigkeit [N/mm2] | | |
|---|---|---|
| 7d | 0,3 | 0,3 |
| 28d | 0,5 | 0,6 |

Im **Beispiel 3** werden Mischungen angegeben. wie sie bei geringeren Sickerwasserkontaminationen eingesetzt werden. Die Suspensionen haben einen Feststoffgehalt von 220 kg/m³.
Standard-Mischung: 68,4 % Hüttensand, 7,6 % hydroxylionenbildender Anreger, 23,0 % Na-Bentonit und 1 % Soda.
Zeolithische Mischung: 66,0 % Hüttensand. 5,0 % hydroxylionenbildender Anreger, 21,0 % Na-Bentonit, 5,0 % Zeolith, 2,0 Füller und 1,0 % Soda.

Die Permeationsversuche wurden hier mit Prüfflüssigkeiten durchgeführt, die 100 mg/l As³⁺ oder Pb²⁺ enthielten. Die Schadstoffadsorption in den zeolithischen Probenkörper waren höher und lassen sich wie folgt darstellen:
Die Schadstoffadsorption in den zeolithischen Proben ist für As³⁺ oder Pb²⁺ nach 5 bzw. 20 Jahren erschöpft, während in den Standardproben bereits nach 0,5 bzw. 2 Jahren keine weitere Schadstoffretention erfolgt und der Schadstoff ungehindert durchtritt.

### Ausführungsbeispiel 4

Messungen nach DIN 4127, 18 130 und 18 136

| | Standard-Fertigmischung (nicht erfindungsgemäß) | zeolithische Fertigmischung gemäß vorliegender Erfindung |
|---|---|---|
| Dosierung [kg/m3] | 240 | 240 |

| Marsh-Zeit [sec] | | |
|---|---|---|
| 0h | 35 | 35 |
| 1h | 40 | 41 |

| Filtratwasser [ml] | | |
|---|---|---|
| 0h | 35 | 36 |
| 1h | 45 | 42 |

| Stationäre Fließgrenze [Pa] Kugelharfe | | |
|---|---|---|
| 0h | 17 | 17 |
| 1h | 24 | 24 |

| Durchlässigkeitsbeiwert kf [m/sec] | | |
|---|---|---|
| 28d | 1 x 10E-9 | 5 x 10E-10 |

| Einaxiale Druckfestigkeit [N/mm2] | | |
|---|---|---|
| 7d | 0,4 | 0,5 |
| 28d | 0,6 | 0,8 |

Im **Beispiel 4** werden Mischungen angegeben. wie sie bei geringen Sickerwasserkontamination eingesetzt werden. Die Rezepturen sind außerdem auf hohe Frühfestigkeiten ausgelegt. Dies wird gefordert. wenn die Dichtwand statischen Belastungen ausgesetzt ist.
Die Suspensionen haben einen Feststoffgehalt von 220 kg/m³.
Standard-Mischung: 65,0 % Hüttensand, 10,0 % hydroxylionenbildender Anreger. 23,0 % Na-Bentonit und 2 % Soda.
Zeolithische Mischung: 58,0 % Hüttensand. 10,0 % hydroxylionenbildender Anreger, 21,0% Na-Bentonit, 7,0 % Zeolith, 3,0 Füller und 1,0 % Soda.

Die Suspensionseigenschaften weichen nur gering voneinander ab, die Festkörperkennwerte der zeolithischen Mischung sind günstiger.

Die Permeationsversuche wurden mit Prüfflüssigkeiten durchgeführt, die 100 mg/l Cr⁶⁺ oder Pb²⁺ enthielten. Die Schadstoffadsorption in den zeolithischen Probenkörper waren wiederum wesentlich höher als in den Standardproben und lassen folgende zeitliche Entwicklung erwarten:
Die Schadstoffadsorption in den zeolithischen Proben ist für Cr⁶⁺ oder Pb²⁺ nach 4 bzw. 49 Jahren erschöpft, während in den Standardproben bereits nach 1 bzw. 10 Jahren keine weitere Schadstoffretention erfolgt.

Durch Einbeziehung der Zeolithe läßt sich somit nachweisbar eine Barriere herstellen, deren Schadstoffretention sich signifikant von Dichtwänden konventioneller Zusammensetzung unterscheidet.

Der erfindungsgemäße Gehalt an anorganischen Zusätzen und speziell der erfindungsgemäße Zeolith-Gehalt bewirkt also eine deutliche Erhöhung der Fähigkeit der erhärteten Dichtwand, Schadstoffe zurückzuhalten. In dieser sprunghaft fortschrittlichen Eigenschaft unterscheiden sich die Dichtwände, die mit der erfindungsgemäßen Bindemittelmischung hergestellt wurden, deutlich von den Dichtwänden des Standes der Technik. Die Zeolithe als Calcium-Fänger bewirken eine Erhöhung der Lagerungsstabilität des trockenen Produkts, womit das Produkt in der Praxis maßgeblich von den Produkten des nächstkommenden Standes der Technik in fortschrittlicher Weise unterschieden ist.

Die Anwesenheit von Zeolith erlaubt eine Anhebung des Portlandzement-Anteils über das üblicherweise qualitätsverträgliche Maß (5 bis 7 %) hinaus. Spezielle Anforderungen erhöhter Frühfestigkeiten lassen sich auf diese Weise erfüllen.

Zeolithe bei niedrigem (5 bis 7 %) oder erhöhtem (> 7 %) Portlandzement-Anteil haben keine rheologischen Nachteile gegenüber herkömmlichen Massen zur Folge, wie sie bei der sonst üblichen Sodadosierung zur Kompensation des Portlandzements eintreten (sogenannte unerwünschte Thixotropieeffekte).

Zeolithe erlauben in solchen Fällen (Portlandzement-Gehalt > 7 %) den Verzicht auf Soda und machen den Einsatz in grundwassersensiblen Bereichen möglich.

Durch die mögliche Erhöhung des Portlandzement-Anteils wird der hydroxidische Puffer des erhärteten Systems angehoben, wodurch die Widerstandsfähigkeit gegen saures Sickerwasser steigt.

Die Zeolithe selbst sind lösungsunempfindliche Silicate und erhöhen somit den gegenüber aggressivem Angriff beständigen Anteil der Dichtwand.

Ein ganz wesentlicher synergistischer Effekt ergibt sich also aus der Lagerungsstabilität, der Umweltverträglichkeit, der Tatsache, daß rheologische Nachteile nicht eintreten und der besonderen Eigenschaft der erhöhten Schadstoffretentionsfähigkeit der erhärteten Dichtwand.

## Patentansprüche

1. Bindemittelmischung zur einstufigen Herstellung von Dichtwänden mit hohem spezifischem Schadstoff-Adsorptions/Absorptionsvermögen enthaltend Hüttensand, Anreger für den Hüttensand, Tonminerale und verbessernde Zusätze,
gekennzeichnet durch einen Gehalt an
a) 30,0 bis 83,3 Masse-% Hüttensand
b) 2,0 bis 10,0 Masse-% eines hydroxylionenbildenden Anregers
c) 15,0 bis 65,0 Masse-% Tonminerale
d) 0,1 bis 10,0 Masse-% Zeolith
e) 0,1 bis 2,5 Masse-% Soda
f) 0,1 bis 20,0 Masse-% Füller.

2. Bindemittelmischung nach Anspruch 1,
gekennzeichnet durch einen Gehalt an
a) 36,0 bis 72,0 Masse-% Hüttensand
b) 4,0 bis 8,0 Masse-% Anreger
c) 20,0 bis 60,0 Masse-% Tonminerale
d) 1,0 bis 8,0 Masse-% Zeolithe
e) 0,5 bis 1,5 Masse-% Soda
f) 1,0 bis 15,0 Masse-% Füller

3. Bindemittelmischung nach Anspruch 1 und/oder 2,
dadurch gekennzeichnet,
daß der Hüttensand eine Mahlfeinheit zwischen 2500 - 5500 cm²/g aufweist.

4. Bindemittelmischung nach Anspruch 1 oder 2,
dadurch gekennzeichnet,
daß der hydroxylionenbildende Anreger für den Hüttensand Portlandzement und/oder Portlandzementklinker und/oder NaOH ist.

5. Bindemittelmischung nach einem der Ansprüche 1 bis 3,
dadurch gekennzeichnet,
daß man als Tonminerale 2-Schicht-Tonminerale und/oder nicht quellfähige 3-Schichtminerale und/oder quellfähige 3-Schichtminerale einsetzt.

6. Bindemittelmischung nach Anspruch 4,
dadurch gekennzeichnet,
daß das quellfähige 3-Schichtmineral Natrium-Bentonit und/oder Calcium-Bentonit und/oder aktivierter Calcium-Bentonit ist.

7. Bindemittelmischung nach einem der vorhergehenden Ansprüche,
dadurch gekennzeichnet,
daß der Zeolith ein natürlicher Zeolith und/oder ein synthetischer Zeolith und/oder ein zeolithführendes Gesteinsmehl ist.

8. Bindemittelmischung nach Anspruch 7,
dadurch gekennzeichnet,
daß der Zeolith ein Zeolith A und/oder Natrolith und/oder Clinoptilolith ist.

9. Bindemittelmischung nach einem der vorhergehenden Ansprüche,
dadurch gekennzeichnet,
daß der Füller hochfein gemahlenes Gesteinmehl und/oder Kalksteinmehl und/oder eine Flugasche aus Entstaubungsanlagen von Steinkohle-Kraftwerken und/oder hochfeine Filterstäube aus Entstaubungsanlagen von thermischen Prozessen ist.

## Claims

1. A binding agent mixture for one-stage production of sealing walls with high specific pollutant adsorption/adsorption capacity containing metallurgical sand, activators for the metallurgical sand, clay minerals and improving additives, characterised by a content of
a) 30.0 to 83.3 % by weight of metallurgical sand,
b) 2.0 to 10.0 % by weight of a hydroxyl ionising activator,
c) 15.0 to 65.0 % by weight of clay minerals,
d) 0.1 to 10.0 % by weight of zeolite,
e) 0.1 to 2.5 % by weight of soda,
f) 0.1 to 20.0 % by weight of filler.

2. A binding agent mixture according to Claim 1, characterised by a content of
a) 36.0 to 72.0 % by weight of metallurgical sand,
b) 4.0 to 8.0 % by weight of activator,
c) 20.0 to 60.0 % by weight of clay minerals,
d) 1.0 to 8.0 % by weight of zeolite,
e) 0.5 to 1.5 % by weight of soda,
f) 1.0 to 15.0 % by weight of filler.

3. A binding agent mixture according to Claim 1 and/or 2, characterised in that the metallurgical sand has a grinding fineness of between 2500 to 5500 cm²/g.

4. A binding agent mixture according to Claim 1 or 2, characterised in that the hydroxyl ionising activator for the metallurgical sand is Portland cement and/or Portland cement clinker and/or NaOH.

5. A binding agent mixture according to any one of Claims 1 to 3, characterised in that 2-layer clay minerals and/or non-swelling 3-layer minerals and/or swelling 3-layer minerals are used as the clay minerals.

6. A binding agent mixture according to Claim 4, characterised in that the swelling 3-layer mineral is sodium bentonite and/or calcium bentonite and/or activated calcium bentonite.

7. A binding agent mixture according to any one of the preceding Claims, characterised in that the zeolite is a natural zeolite and/or a synthetic zeolite and/or a zeolite-bearing crushed rock.

8. A binding agent mixture according to Claim 7, characterised in that the zeolite is an A zeolite and/or natrolite and/or clinoptilolite.

9. A binding agent mixture according to any one of the preceding Claims, characterised in that the filler is very finely ground crushed rock and/or limestone powder and/or fly ash from dust-extraction units in coal-fired power stations and/or very fine filter dust from dust-extraction units in thermal processes.

## Revendications

1. Mélange liant pour la préparation en une seule étape de parois étanches ayant un pouvoir spécifique élevé d'adsorption/absorption de substances nocives, contenant un laitier granulé, un activateur pour le laitier granulé, des minéraux argileux et des additifs d'amélioration, caractérisé en ce qu'il contient :
a) 30,0 à 83,3 % en poids de laitier granulé,
b) 2,0 à 10,0 % en poids d'un activateur formant des ions hydroxyle,
c) 15,0 à 65,0 % en poids de minéraux argileux,
d) 0,1 à 10,0 % en poids de zéolite,
e) 0,1 à 2,5 % en poids de carbonate de sodium, et
f) 0,1 à 20,0 % en poids de charge.

2. Mélange liant selon la revendication 1, caractérisé en ce qu'il contient :
a) 36,0 à 72,0 % en poids de laitier granulé,
b) 4,0 à 8,0 % en poids d'activateur,
c) 20,0 à 60,0 % en poids de minéraux argileux,
d) 1,0 à 8,0 % en poids de zéolites,
e) 0,5 à 1,5 % en poids de carbonate de sodium, et
f) 1,0 à 15,0 % en poids de charge.

3. Mélange liant selon la revendication 1 et/ou la revendication 2, caractérisé en ce que le laitier granulé a un degré de mouture compris entre 2 500 et 5 500 cm²/g.

4. Mélange liant selon la revendication 1 ou 2, caractérisé en ce que l'activateur formant des ions hydroxyle pour le laitier granulé est du ciment de Portland et/ou un clinker de ciment de Portland et/ou NaOH.

5. Mélange liant selon l'une des revendications 1 à 3, caractérisé en ce qu'on utilise, comme minéraux argileux, des minéraux argileux à 2 couches et/ou des minéraux à 3 couches inaptes à gonfler et/ou des minéraux à 3 couches aptes à gonfler.

6. Mélange liant selon la revendication 4, caractérisé en ce que le minéral à 3 couches apte à gonfler est la bentonite sodique et/ou la bentonite calcique et/ou de la bentonite calcique activée.

7. Mélange liant selon l'une des revendications précédentes, caractérisé en ce que la zéolite est une zéolite naturelle et/ou une zéolite synthétique et/ou une roche pulvérisée transportant de la zéolite.

8. Mélange liant selon la revendication 7, caractérisé en ce que la zéolite est une zéolite A et/ou la natrolite et/ou la clinoptilolite.

9. Mélange liant selon l'une des revendications précédentes, caractérisé en ce que la charge est une roche pulvérisée broyée très finement et/ou une mouture de pierre à chaux et/ou des cendres volantes provenant des installations d'élimination des poussières d'usines thermiques fonctionnant à la houille et/ou des poussières très fines provenant des filtres des dispositifs d'élimination des poussières lors de procédés thermiques.
